# EUROPEAN PATENT APPLICATION

(11) **EP 4 333 122 A1**
(43) Date of publication of application: **06.03.2024**
(21) Application number: 22796086.1
(22) Date of filing: 26.04.2022
(51) Int. Cl.: H01M 4/525, H01M 4/505, H01M 10/052, C01G 53/00

(54) **POSITIVE ACTIVE MATERIAL, PREPARING METHOD THEREOF AND RECHARGEABLE LITHIUM BATTERY**

(30) Priority: 29.04.2021 KR 20210055862
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); POSCO Chemical Co., Ltd, Gyeongsangbuk-do 37918 (KR)
(72) Inventor: PARK, Inchul, Incheon 22008 (KR); KIM, Hyungsub, Seoul 08826 (KR); LEE, Sanghyuk, Incheon 22405 (KR); SONG, Jung Hoon, Gwacheon-si, Gyeonggi-do 13835 (KR); KIM, Junghoon, Incheon 22003 (KR); CHOI, Kwon Young, Seoul 07987 (KR); KWON, Ohmin, Incheon 22018 (KR); NAM, Sang Cheol, Seoul 02587 (KR); SONG, Seok Hyun, Daejeon 34057 (KR)
(74) Representative: Potter Clarkson
(86) International application number: PCT/KR2022/005906
(87) International publication number: WO 2022/231253

(57) **Abstract**

It is related to a positive active material for a lithium secondary battery, comprising:
a compound represented by the following formula 1,
wherein, a molar content of lithium present in a structure of the positive active material, measured through neutron diffraction analysis, is 1.02 to 1.15 per mole of the positive active material, and a c-axis lattice constant variation ratio of the R-3m structure is less than 2.3% for charge and discharge in the 2.5 V to 4.25 V range.

[Chemical Formula 1] Li₁₊ₐ(Ni_{b}M¹_{1-b})₁₋ₐO₂

in formula 1 above, 0<a<0.2, 0.8<b<1, and M1 is one or more elements selected from Co, Mn, Al, Mg, Ca, Ti, V, Cr, Zr, Nb, Mo, and W.

## Description

### CROSS-REFERENCE TO RELATED APPLICATION

This application claims priority to and the benefit of Korean Patent Application No. 10-2021-0055862 filed in the Korean Intellectual Property Office on April 29, 2021, and Korean Patent Application No. 10-2020-0179769 filed in the Korean Intellectual Property Office on December 21, 2020, the entire contents of which are incorporated herein by reference.

### BACKGROUND OF THE INVENTION

### (a) Field of the Invention

It relates to a positive active material for a lithium secondary battery, its manufacturing method, and a lithium secondary battery containing the same.

### (b) Description of the Related Art

Due to the recent expansion in demand for electric vehicles, the demand for lithium secondary batteries to drive them is rapidly increasing. As a positive active material for these lithium secondary batteries, layer-based lithium transition metal oxide (LiMO₂, M = Ni, Co, Mn, etc.) is mainly used, and research on making it high-capacity is actively performed. Among the existing layer-based positive active materials, the materials with the highest capacity are LiNiO₂ and high-nickel-based layered positive electrode materials. However, due to the instability of Ni(III), there are difficulties in stoichiometric material synthesis. Additionally, there is a problem in that the electrochemical characteristics change significantly even with a small change in lithium during the synthesis process.

### SUMMARY OF THE INVENTION

We provide lithium excess high nickel-based positive active material and its manufacturing method with high price competitiveness, high stability, and high energy density, and lithium secondary batteries containing the same.

In one embodiment, it is provided a positive active material for a lithium secondary battery, comprising:
a compound represented by the following formula 1,
wherein, a molar content of lithium present in a structure of the positive active material, measured through neutron diffraction analysis, is 1.02 to 1.15 per mole of the positive active material, and a c-axis lattice constant variation ratio of the R-3m structure is less than 2.3% for charge and discharge in the 2.5 V to 4.25 V range.

   [Chemical Formula 1] Li₁₊ₐ(Ni_{b}M¹_{1-b})₁₋ₐO₂
in formula 1 above, 0<a<0.2, 0.8<b<1, and M1 is one or more elements selected from Co, Mn, Al, Mg, Ca, Ti, V, Cr, Zr, Nb, Mo, and W.

In another embodiment, it is provided a manufacturing method of a positive active material for lithium secondary battery, comprising:
mixing a precursor containing the compound represented by the following formula 11, and a lithium raw material at a mole ratio of 1:1.06 to 1:1.3, and sintering the mixture in the temperature range of 680 °C to 780 °C.

   [Chemical Formula 11] Ni_{b11}M¹¹_{1-b11} (OH)₂
in formula 11 above, 0.8<b11<1, M¹¹ is one or more elements selected from Co, Mn, Al, Mg, Ca, Ti, V, Cr, Zr, Nb, Mo, and W.

Another embodiment provides a lithium secondary battery including a positive electrode including the positive active material, a negative electrode, and an electrolyte.

A positive active material and a lithium secondary battery including the same according to one embodiment implement high price competitiveness, high stability, high energy density, high-capacity, and high cycle-life characteristics.

### BRIEF DESCRIPTION OF THE DRAWINGS

FIG. 1 is a schematic diagram showing the chemical structure of a lithium-excessive high nickel-based positive active material.
FIG. 2 is a graph analyzing the lithium content in the positive active material structure of Examples 1 to 8 and Comparative Examples 1 to 5, 11, and 12.
FIG. 3 is a real-time X-ray diffraction pattern analysis graph for the positive active material of an Example 4.
FIG. 4 is a real-time X-ray diffraction pattern analysis graph for the positive active material of an Example 8.
FIG. 5 is a real-time X-ray diffraction pattern analysis graph for the positive active material of Comparative Example 5.
FIG. 6 is a graph showing the change in lattice constant according to real-time X-ray diffraction analysis for the positive active material of an Example 4.
FIG. 7 is a graph showing the change in lattice constant according to real-time X-ray diffraction analysis for the positive active material of an Example 8.
FIG. 8 is a graph showing the change in lattice constant according to real-time X-ray diffraction analysis for the positive active material in Comparative Example 5.
FIG. 9 is a graph showing the change in lattice constant according to real-time X-ray diffraction analysis of the second charge and discharge of the positive active material of an Example 4.
FIG. 10 is a graph showing the change in lattice constant according to real-time X-ray diffraction analysis of the second charge and discharge of the positive active material of an Example 8.
FIG. 11 is a graph showing the change in lattice constant according to real-time X-ray diffraction analysis of the second charge and discharge of the positive active material in Comparative Example 5.
FIG. 12 is a pair distribution function (PDF) analysis graph for the positive active materials manufactured in Comparative Examples 1, 11, and 12.
FIG. 13 is a pair distribution function (PDF) analysis graph for the positive active material manufactured in an Example 4, an Example 8, and comparative example 5.
FIG. 14 is a graph analyzing the cation mixing of the positive active materials of Examples 1 to 8 and Comparative Examples 1 to 5, 11, and 12.
FIG. 15 is a graph showing the contents of Li₂CO₃ and Li₂O, which are impurities remaining in the positive active material of Comparative Examples 1 to 5.
FIG. 16 is a graph showing the contents of Li₂CO₃ and Li₂O, which are impurities remaining in the positive active materials of Comparative Example 12 and Examples 5 to 8.
FIG. 17 is a graph showing the contents of Li₂CO₃ and Li₂O, which are impurities remaining in the positive active materials of Comparative Example 11 and Examples 1 to 4.
FIG. 18 is a graph showing the cycle-life characteristics of the batteries of Comparative Example 12 and Examples 5, 6, 7, and 8.
FIG. 19 is a graph showing the cycle-life characteristics of the batteries of Comparative Example 11 and Examples 1, 2, 3, and 4.
FIG. 20 is a graph showing the cycle-life characteristic of the batteries of Comparative Examples 1, 2, 3, 4, and 5.

### DETAILED DESCRIPTION OF THE EMBODIMENTS

Hereinafter, specific implementation examples will be described in detail so that a person of an ordinary skill in this technical field can easily implement it. However, the present invention may be implemented in several different forms and is not limited to the implementation examples described here.

The terminology used herein is only used to describe example implementations and is not intended to limit the present invention. Singular forms used herein include plural forms as long as phrases do not clearly indicate an opposite meaning.

Here, "combination thereof" means mixture of components, laminate, composite, copolymer, alloy, blend, reaction products, etc.

The term "including/comprising/containing" as used herein concretely indicates specific characteristics, regions, integer numbers, steps, operations, elements, and/or components, and is not to exclude presence or addition of other specific characteristics, regions, integer numbers, steps, operations, elements, and/or components.

In order to clearly express multiple layers and regions in the drawing, the thickness is enlarged and shown. Similar reference numerals designate similar elements throughout the specification. When any portion is referred to as being "above" or "on" another portion, any portion may be directly above or on another portion or be above or on another portion with the other portion interposed therebetween. In contrast, when an element is referred to as being "directly on" another element, there are no intervening elements present.

Also, here, "layer" includes not only the shape formed on the entire face when observed from a plan view, but also the shape formed on some faces.

According to one embodiment, the positive active material for a lithium secondary battery is a lithium-excessive high nickel-based layer-type positive active material containing a compound represented by Chemical Formula 1 below.

[Chemical Formula 1] Li₁₊ₐ(Ni_{b}M¹_{1-b})₁₋ₐO₂

In formula 1 above, 0<a<0.2, 0.8<b<1, M¹ is one or more elements selected from Co, Mn, Al, Mg, Ca, Ti, V, Cr, Zr, Nb, Mo, and W.

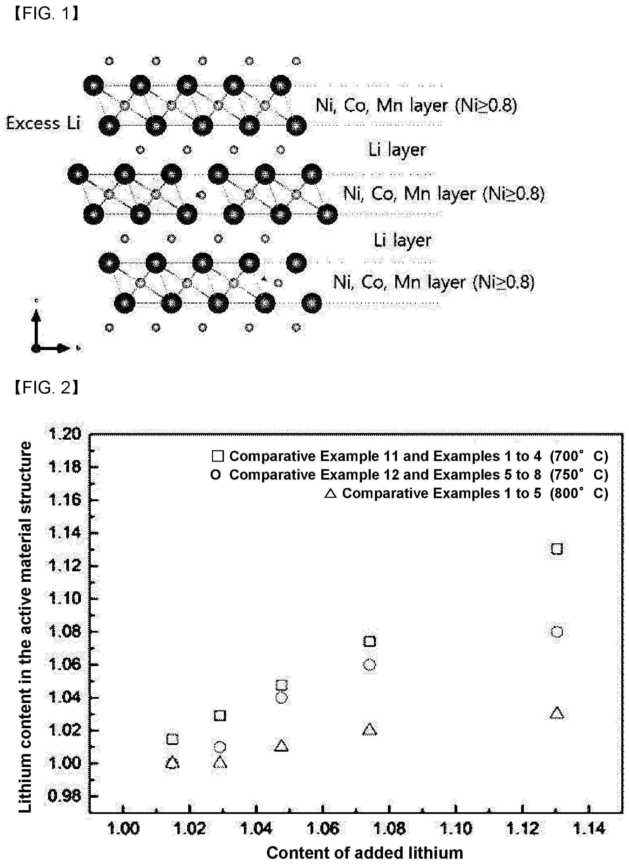

Here, lithium excess means that excess lithium enters the active material structure and lithium occupies some of the transition metal sites. FIG. 1 is a diagram showing the chemical structure of a positive active material according to one embodiment, showing a structure in which excess lithium is contained in some of the transition metal sites such as Ni, Co, and/or Mn. According to one embodiment, the molar content of lithium present in the structure of the positive active material is 1.02 to 1.15 per mole of the positive active material. The molar content of the lithium can be measured, for example, through neutron diffraction analysis. The molar content of lithium present in the positive active material structure can be expressed as 1.02 to 1.15 for 1 mole of compound expressed by formula 1 above. In formula 1 above, the range of a in (1+a), which represents the content of lithium in the active material structure, may be, for example, 0.005≤a≤0.19, 0.01≤a≤0.17, or 0.02≤a≤0.15.

In addition, the high nickel type means that the nickel content in the active material is high, and specifically, it may mean that the nickel content is more than 80 mol% based on the total content of transition metals excluding lithium. For example, the nickel content may be 81 mol% or more, 85 mol% or more, 89 mol% or more, 90 mol% or more, or 92 mol% or more. The b value representing the nickel content in the above formula 1 is, for example, 0.81≤b≤0.99, 0.83≤b≤0.99, 0.85≤b≤0.99, 0.87≤b≤0.99, 0.89≤b≤0.99, 0.90≤b≤0.99, 0.91≤b≤0.99, 0.92≤b≤0.99, or 0.81≤b≤0.98.

That is, the positive active material according to one embodiment is a high nickel-based material with a nickel content exceeding 80 mol%, and a lithium excess active material with 1.02 to 1.15 mole content of lithium contained in the active material structure.

In general, high nickel-based positive active materials achieve high-capacity, but synthesis itself is difficult and structural stability is difficult to secure, and even if synthesized, cation mixing phenomenon in which Ni²⁺ ions occupy lithium sites increases, reducing capacity. This problem occurs frequently and it is difficult to ensure battery safety. When excessive lithium raw materials are added during synthesis to lower cation mixing and increase capacity, lithium often does not enter the active material structure but remains in the form of impurities such as Li₂CO₃ or Li₂O, and this impurity reduces the capacity of the battery. This can cause stability problems.

Accordingly, the present inventors found that the electrochemical characteristics of the positive active material of the lithium-excessive high nickel-based layer change significantly due to changes in the composition of fine lithium and changes in synthesis temperature. When synthesis was performed within a specific lithium content range and at a specific temperature range, it was found that the nickel content was very high and a certain amount of lithium was incorporated into the active material structure. It was confirmed that a positive active material with a stable structure with a c-axis lattice constant variation ratio of less than 2.3% of the R-3m structure according to charge and discharge in the 2.5 V to 4.25 V range could be successfully synthesized. In addition, it was confirmed that the synthesized positive active material realized high-capacity and high energy density, and that the cycle-life characteristics and stability of the battery were improved.

According to one embodiment, the lithium-excessive high nickel-based layer-type positive active material has a change in c-axis lattice constant of less than 2.3% when charging and discharging in the 2.5 V to 4.25 V range. Specifically, while charging and discharging a lithium secondary battery using the positive active material in the 2.5 V to 4.25 V range, real-time X-ray diffraction pattern analysis is performed and the resulting change in lattice constant is analyzed. According to this, the positive active material according to one embodiment has a very small change in X-ray diffraction peak. Additionally, the change in a-axis lattice constant (a lattice parameter) and c-axis lattice constant (c lattice parameter) is small. In particular, the variation ratio of the c-axis lattice constant satisfies less than 2.3%. This is understood to be that the phase transition is suppressed due to the lithium present in the transition metal layer, thereby reducing the change in lattice constant. If the lattice constant variation ratio satisfies the range, strain and cracks occurring in the positive active material during charge and discharge are suppressed. The phenomenon of the positive active material breaking or falling off is reduced, dramatically improving the cycle-life characteristics of the lithium secondary battery.

The positive active material can be expressed as a change of less than 2.3% in the c-axis lattice constant of the layered structure of the compound indicated by Chemical Formula 1 measured through real-time X-ray diffraction analysis during charge and discharge of 2.5 V to 4.25 V. Alternatively, a lithium secondary battery containing the positive active material may be expressed as a change in the c-axis lattice constant of the positive active material measured through real-time X-ray diffraction analysis of less than 2.3% during charge and discharge in the 2.5 V to 4.25 V range.

Additionally, the c-axis lattice constant may be a value measured with the R-3m structural model, or may be a value measured with the C2/m structural model. Or, it may be a value measured using the mixture model of R-3m structure and C2/m structure. No matter which structural model is measured, the variation ratio of c-axis lattice constant according to charge and discharge can be satisfied at less than 2.3%.

The change in the c-axis lattice constant of the positive active material according to the charge and discharge may be, for example, 2.2% or less, 2.0% or less, 1.8% or less, 1.7% or less, 1.5% or less or 1.0% or less, and 0.1% or less. It may be more than 0.2%, more than 0.3%, more than 0.4% or more than 0.5%. A positive active material that satisfies the range is structurally very stable and does not collapse or break even after repeated charging and discharging, so it can exhibit excellent cycle-life characteristics and realize high-capacity.

Here, the variation ratio (%) of the c-axis lattice constant of the positive active material according to charge and discharge may be derived through the calculation formula {(MAX-MIN)/MAX x 100}. In the calculation formula, MAX is the maximum value of the c-axis lattice during charge and discharge in the range of 2.5 V to 4.25 V, and MIN means the minimum value of the c-axis lattice.

The positive active material may have a change in c-axis lattice constant of the R-3m structure according to charge and discharge in the 2.5 V to 4.25 V range, for example, 0.33 Å or less, 0.32 Å or less, 0.31 Å or less, 0.30 Å or less, It may be less than 0.30 Å, 0.28 Å or less, 0.26 Å or less, or 0.25 Å or less, and may be 0.01 Å or more, 0.05 Å or more, or 0.08 Å or more. If this range is satisfied, the positive active material can exhibit excellent cycle-life characteristics by suppressing the phenomenon of structure collapse or cracking even after repeated charging and discharge. The change in the c-axis lattice constant means the value obtained by subtracting the minimum value (MIN) from the maximum value (MAX) of the c-axis lattice during charge and discharge in the range of 2.5 V to 4.25 V.

Additionally, the minimum value of the c-axis lattice constant during charge and discharge in the 2.5 V to 4.25 V range of the positive active material may be 99.5% or more compared to the initial lattice constant, for example, 99.6% or more, 99.7% or more, 99.8% or more. It may be more than 99.9%. In this case, the positive active material can maintain structural stability even after repeated charging and discharge, showing excellent cycle-life characteristics.

The positive active material may also be one in which the c-axis lattice constant of the R-3m structure changes within a range of 13.90 Å to 14.46 Å during charge and discharge in the 2.5 V to 4.25 V range. For example, it may change within the range of 13.90 Å to 14.40 Å, or 14.00 Å to 14.30 Å, or 14.13 Å to 14.22 Å, and 14.16 Å to 14.41 Å. When the c-axis lattice constant changes within this narrow range, the positive active material can achieve structural stability even after repeated charging and discharge, and thus can exhibit high cycle-life characteristics.

Here, the change in c-axis lattice constant may mean not only the value at initial charge and discharge, but also the value at repeated charge and discharge such as second and third charge. That is, the positive active material according to one embodiment is structurally stable and can show a very low change in c-axis lattice constant even after repeated charging and discharging.

The positive active material according to one embodiment has a cation mixing, which refers to the content of nickel in the lithium site, of less than 5 atom%. In the case of high nickel-based positive active materials with a nickel content exceeding 80 mol%, there is a problem of capacity reduction due to excessive cation mixing in which Ni2 ions occupy lithium sites. On the other hand, in the positive active material according to one embodiment, excess lithium took up some of the transition metal sites, the average oxidation number of the transition metal increased, and cation mixing was shown to decrease accordingly. For example, the average oxidation number of nickel is increased by excess lithium, suppressing the formation of a rock salt phase of Ni(II)-O bonds on the positive active material surface, and reducing cation mixing, which has the effect of suppressing the elute of nickel. The cation mixing may be, for example, less than 4.5 atom%, less than 4.0 atom%, or less than 3.5 atom%. If the cation mixing satisfies the range, the positive active material can achieve sufficient capacity and ensure battery stability.

The positive active material is one in which the excessively added lithium has successfully entered the active material structure, so the impurity content of Li₂CO₃, Li₂O, etc. remaining in the active material is very low. Specifically, the content of Li₂CO₃ present in the positive active material may be less than 0.5 wt%, for example, less than 0.4 wt%. Additionally, the content of Li₂O present in the positive active material may be less than 1.0 wt%, for example, less than 0.8 wt% or less than 0.5 wt%. The contents of the Li₂CO₃ and Li₂O may be measured, for example, through X-ray diffraction analysis. If the impurity content of the Li₂CO₃ and Li₂O satisfies the range, it is proven that the lithium excess positive active material structure has been successfully synthesized. A positive active material that satisfies this requirement can realize high-capacity and exhibit excellent battery characteristics such as high cycle-life characteristics.

As an example, the positive active material may include a compound represented by Chemical Formula 2 below.

[Chemical Formula 2] Li1+a2 (Ni_{b2}Mn_{c2}M²_{1-b2-c2})₁₋ₐ₂O₂

In above formula 2, 0<a2<0.2, 0.8<b2<1, 0<c2<0.2, 0≤1-b2-c2<0.2, M² is one or more elements selected from Co, Al, Mg, Ca, Ti, V, Cr, Zr, Nb, Mo, and W. A positive active material containing the compound represented by formula 2 above can demonstrate excellent battery characteristics such as high cycle-life characteristics while realizing high-capacity.

As another example, the positive active material may include a compound represented by Chemical Formula 3 below.

[Chemical Formula 3] Li1+a3 (Ni_{b3}Co_{c3}M³_{1-b3-c3})₁₋ₐ₃O₂

In above formula 3, 0<a3<0.2, 0.8<b3<1, 0<c3<0.2, 0≤1-b3-c3<0.2, M³ is one or more elements selected from Mn, Al, Mg, Ca, Ti, V, Cr, Zr, Nb, Mo, and W. A positive active material containing the compound represented by formula 3 above can exhibit excellent battery characteristics such as high cycle-life characteristics while realizing high-capacity.

As another example, the positive active material may include a compound represented by Chemical Formula 4 below.

[Chemical Formula 4] Li₁₊ₐ₄(Ni_{b4}Co_{c4}Mn_{d4}M⁴_{1-b4-c4-d4})₁₋ₐ₄O₂

In formula 4 above, 0<a4<0.2, 0.8<b4<1, 0<c4<0.1, 0<d4<0.1, 0≤1-b3-c3-d4<0.1, M⁴ is one or more elements selected from Al, Mg, Ca, Ti, V, Cr, Zr, Nb, Mo, and W. A positive active material containing the compound represented by formula 4 above can demonstrate excellent battery characteristics such as high cycle-life characteristics while realizing high-capacity.

The average particle diameter of the positive active material may be about 2 µm to 25 µm, for example, 5 µm to 25 µm, 10 µm to 25 µm, or 10 µm to 20 µm. If the average particle diameter of the positive active material satisfies the range, a positive active material with high tap density and high energy density per volume can be implemented.

One embodiment provides a manufacturing method of the above-described positive active material. The manufacturing method of the positive active material comprises:
mixing precursor and lithium raw materials containing the compound shown in Chemical Formula 11 below at a mole ratio of 1:1.06 to 1:1.3 and heat treatment at a temperature range of 650 °C to 780 °C.

[Chemical Formula 11] Ni_{b11}M¹¹_{1-b11}(OH)₂

In formula 11 above, 0.8<b11<1, M¹¹ is one or more elements selected from Co, Mn, Al, Mg, Ca, Ti, V, Cr, Zr, Nb, Mo, and W.

According to this manufacturing method, it is possible to successfully synthesize a layer-type positive active material that is a high nickel-based material with a nickel content exceeding 80 mol% and has an excessive amount of lithium incorporated into the structure. It is possible to synthesize a positive active material with a change in c-axis lattice constant of less than 2.3% due to charge and discharge. The synthesized positive active material can realize high-capacity and high energy density. It can exhibit excellent battery characteristics such as high cycle-life characteristics.

The compound represented by formula 11 above is a transition metal hydroxide containing nickel and is the precursor of the positive active material. In formula 11 above, b11 represents the molar content of nickel relative to the transition metal entire content, for example, 0.81≤b11≤0.99, 0.83≤b11 ≤0.99, 0.85≤b11≤0.99, 0.87≤b11≤0.99, 0.89≤b11 It may be ≤0.99, 0.90≤b11≤0.99, 0.91≤b11≤0.99, 0.92≤b11≤0.99, or 0.81≤b11≤0.98.

When synthesizing a lithium-excessive high nickel-based positive active material, the success or failure of the synthesis is determined even by a slight change in the added lithium content, and the electrochemical characteristic of the synthesized active material changes significantly. In one embodiment, the transition metal oxide precursor and lithium raw material can be mixed at a mole ratio of 1:1.06 to 1:1.3 and heat treated at a temperature range of 680 °C to 780 °C. We were able to successfully synthesize a lithium-excessive, high-nickel-based positive active material that achieves high-capacity while maintaining a stable structure. The mixing ratio of the transition metal oxide precursor and lithium raw material may be, for example, a mole ratio of 1:1.06 to 1:1.25, or 1:1.06 to 1:1.2. Also, the heat treatment temperature is for example 680 °C to 750 °C, 680 °C to 740 °C, 680 °C to 730 °C, 680 °C to 710 °C, 680 °C to 700 °C, or It can be 690 °C to 780 °C, or 700 °C to 750 °C. If the mixing ratio of transition metal oxide precursor and lithium raw material satisfies the range, and if the heat treatment temperature satisfies the range, the desired lithium-excessive high nickel-based positive active material can be successfully synthesized. In other words, as a material with a nickel content exceeding 80 mol%, a positive active material with excess lithium satisfying the molar content of lithium present in the structure of 1.02 to 1.15 can be successfully synthesized. The synthesized positive active material can exhibit excellent battery characteristics, such as high-capacity and high energy density, and high cycle-life characteristics.

The transition metal oxide, that is, the precursor of the positive active material, can be manufactured by a general co-precipitation method. For example, the precursor can be manufactured using an aqueous solution including a metal salt containing nickel raw materials such as a nickel salt, an aqueous solution of ammonia as a chelating agent, and an alkali aqueous solution such as NaOH for pH adjustment. It can be manufactured by putting these raw materials into a co-precipitation reactor and performing a co-precipitation reaction while injecting N₂ to prevent oxidation of metal ions.

The nickel salt may be nickel sulfate, nickel nitrate, nickel chloride, nickel fluoride or a combination thereof. The aqueous solution of metal salt, may further include cobalt salt, manganese salt, aluminum salt, etc. in addition to nickel salt. The cobalt salt may be, for example, cobalt sulfate, cobalt nitrate, cobalt chloride, cobalt fluoride, or a combination thereof. The manganese salt may be, for example, manganese sulfate, manganese nitrate, manganese chloride, manganese fluoride, or a combination thereof, and the aluminum salt may be, for example, aluminum sulfate, aluminum nitrate, aluminum chloride, aluminum fluoride, or a combination thereof.

The lithium raw material may include, for example, Li₂CO₃, LiOH, or a combination thereof.

Another embodiment provides a lithium secondary battery containing:
a positive electrode including the above-described positive active material; a negative electrode; and non-aqueous electrolytes.

The positive electrode includes a current collector and a positive active material layer including a positive active material formed on the current collector. The positive active material includes a positive active material according to an embodiment. In the positive electrode, the content of the positive active material may be 90 wt% to 99 wt% with respect to the entire weight of the positive active material layer.

In one embodiment, the positive active material layer may further include a binder and a conductive material. In this case, the content of the binder and the conductive material may be 1 wt% to 5 wt%, respectively, with respect to the entire weight of the positive active material layer.

The binder serves to attach the positive active material particles well to each other and to attach the positive active material to the current collector well. Representative examples of the binder include polyvinyl alcohol, carboxymethylcellulose, hydroxypropylcellulose, diacetylcellulose, polyvinylchloride, carboxylated polyvinylchloride, polyvinylfluoride, polymers containing ethylene oxide, polyvinylpyrrolydone, polyurethane, polytetrafluoroethylene, polyvinylidene fluoride, polyethylene, polypropylene, styrene-butadiene rubber, acrylated styrene-butadiene rubber, epoxy resin, nylon, etc. may be used, but are not limited thereto.

The conductive material is used to impart conductivity to the electrode, and any electronic conductive material can be used without causing chemical change in the battery to be configured. Examples of the conductive material include carbon-based materials such as natural graphite, artificial graphite, carbon black, acetylene black, ketchen black, and carbon fiber; metal-based materials such as metal powder or metal fibers such as copper, nickel, aluminum, and silver; conductive polymers such as polyphenylene derivatives; or a conductive material containing a mixture thereof.

As the current collector, aluminum foil, nickel foil, or a combination thereof may be used, but is not limited thereto.

The negative electrode may include a current collector and a negative active material layer formed on the current collector and including the negative active material according to an embodiment.

The negative active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material, any generally-used carbon-based negative active material can be used in a lithium ion secondary battery, and typical examples thereof include crystalline carbon, amorphous carbon or combination thereof.

The alloy of the lithium metal is from the group consisting of lithium and Na, K, Rb, Cs, Fr, Be, Mg, Ca, Sr, Si, Sb, Pb, In, Zn, Ba, Ra, Ge, Al and Sn. Any alloy of selected metals may be used.

Materials capable of doping and undoping the lithium include Si, SiOx (0 < x < 2), Si-Y alloy (the Y is an element selected from the group consisting of an alkali metal, an alkaline earth metal, a group 13 element, a group 14 element, a transition metal, and a rare earth element and its combination thereof, but not Si), Sn, SnO₂, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative active material layer also includes a binder and may optionally further include a conductive material.

The binder serves to adhere the negative active material particles to each other well and to adhere the negative active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The positive/negative active material layer is formed by mixing the positive/negative active material, a binder and optionally a conductive material in a solvent to prepare an active material composition, and applying the active material composition to a current collector. Since such an electrode formation method is widely known in the art, a detailed description thereof will be omitted in this specification. As the solvent, N-methylpyrrolidone and the like can be used, but is not limited thereto.

The electrolyte includes a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, polyethylene/polypropylene/polyethylene 3-layer separator, polypropylene/polyethylene/polypropylene 3-layer separator can be used. Lithium secondary batteries can be classified into lithium ion batteries, lithium ion polymer batteries, and lithium polymer batteries depending on the type of separator and electrolyte used. Depending on the shape, it can be classified into cylindrical, prismatic, coin-type, pouch-type, etc., and depending on the size, it can be divided into bulk type and thin film type. The structure and manufacturing method of these batteries are widely known in this field, and is not described in further detail.

### DETAILED DESCRIPTION OF THE EMBODIMENTS

An Example and Comparative Example are described below. Such Examples described below are merely an Example, and the present invention is not limited to the Examples described below.

### Example 1

### (1) Fabrication of positive active material precursor

A precursor with a composition of Ni_{0.92}Co_{0.04}Mn_{0.04}(OH)₂ is prepared by a general co-precipitation method. Specifically, a metal salt an aqueous solution is prepared by dissolving NiSO₄·6H₂O, CoSO₄·7H₂O, and MnSO₄·H₂O in distilled water. After preparing the co-precipitation reactor, N₂ is injected to prevent oxidation of metal ions during the co-precipitation reaction, and the reactor temperature is maintained at 50°C. NH₄(OH) is added as a chelating agent to the co-precipitation reactor, and NaOH is added to adjust pH. The precipitate obtained according to the co-precipitation process is filtered, washed with distilled water, and dried in an oven at 100°C for 24 hours to prepare a positive active material precursor with an average diameter of about 14.8 µm.

### (2) Manufacturing of positive active material

After mixing the prepared precursor and LiOH·H₂O at a mole ratio of 1:1.06, place it in a tube furnace and sinter it while oxygen is inflowed at 50 mL/min. After raising the temperature to 700°C at a speed of 10°C/min, this temperature is maintained for 12 hours, and then the product is naturally cooled to 25°C.

### (3) Manufacturing of batteries

92% of the manufactured positive active material, 4% of Super P as a conductive material, and 4% of PVDF as a binder were added to the NMP solution, mixed to produce a slurry, and then applied on an aluminum current collector to produce a positive electrode. Then it is produced a coin half-cell with a negative electrode by lithium metal.

### Examples 2 to 8, Comparative Examples 1 to 5, Comparative Examples 11 and 12

In the manufacture of the positive active material in Example 1, the precursor, positive active material, and battery were manufactured using the same method, except that the mixing ratio of the precursor and LiOH·H₂O and the heat treatment temperature were changed as shown in Table 1 below.

**(Table 1)**

| | Mole ratio of lithium raw material to precursor | Sintering temperature (°C) |
|---|---|---|
| Comparative Example 11 | 103 | 700 |
| Example 1 | 106 | 700 |
| Example 2 | 1.10 | 700 |
| Example 3 | 1.16 | 700 |
| Example 4 | 1.30 | 700 |
| Comparative Example 12 | 103 | 750 |
| Example 5 | 106 | 750 |
| Example 6 | 1.10 | 750 |
| Example 7 | 1.16 | 750 |
| Example 8 | 1.30 | 750 |
| Comparative Example 1 | 103 | 800 |
| Comparative Example 2 | 106 | 800 |
| Comparative Example 3 | 1.10 | 800 |
| Comparative Example 4 | 116 | 800 |
| Comparative Example 5 | 1.30 | 800 |

### Evaluation Example 1: Analysis of lithium content in positive active material structure through neutron diffraction analysis

Neutron diffraction analysis was performed on the positive active materials manufactured in Examples 1 to 8 and Comparative Examples 1 to 5, 11, and 12 using the HANARO atom furnace of the Korea Atom Research Institute, and Rietveld refinement was performed using this. And then it was performed to analyze the lithium content in the positive active material structure, and the results are shown in FIG. 2. Referring to FIG. 2, in the case of Examples 1 to 8, it can be seen that the molar content of lithium in the active material structure is in the range of 1.02 to 1.15 for 1 mole of active material, and compared to the Comparative Example, lithium enters the active material structure more easily.

### Evaluation example 2: Real-time X-ray diffraction analysis during charge and discharge

Charge and discharge were performed in the 2.5 V to 4.25 V range for the batteries manufactured in Example 4, Example 8, and comparative example 5, where the mole ratio of lithium raw material to precursor was 1.30. Then real-time X-ray diffraction analysis and analysis of changes of lattice constant in R-3m structural model were performed. X-ray diffraction analysis (XRD) was performed with an X-ray diffraction meter (Empyrean, Malvern Panalytical) equipped with CuKα radiation (λ = 1.540598 Å).

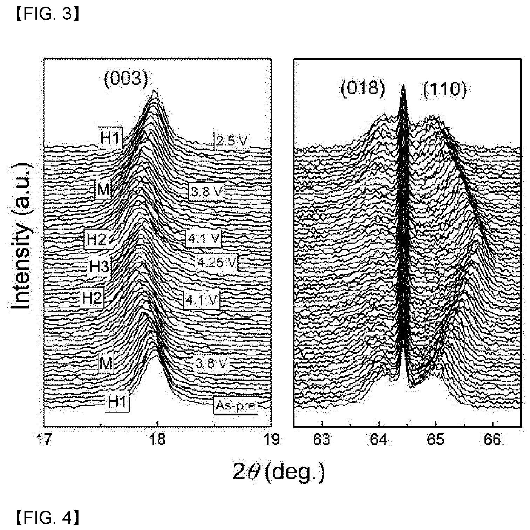

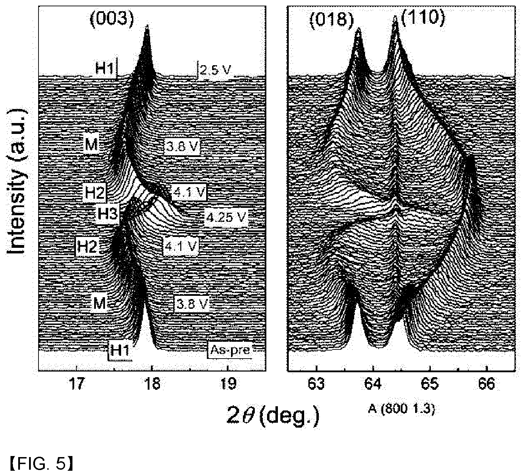

FIG. 3 to FIG. 5 is the real-time X-ray diffraction pattern of sequentially Example 4, Example 8, and comparative example 5. Referring to FIG. 3 to FIG. 5, it can be seen that in the case of Examples 4 and 8, the change in position of the X-ray diffraction peak is smaller than that of Comparative Example 5.

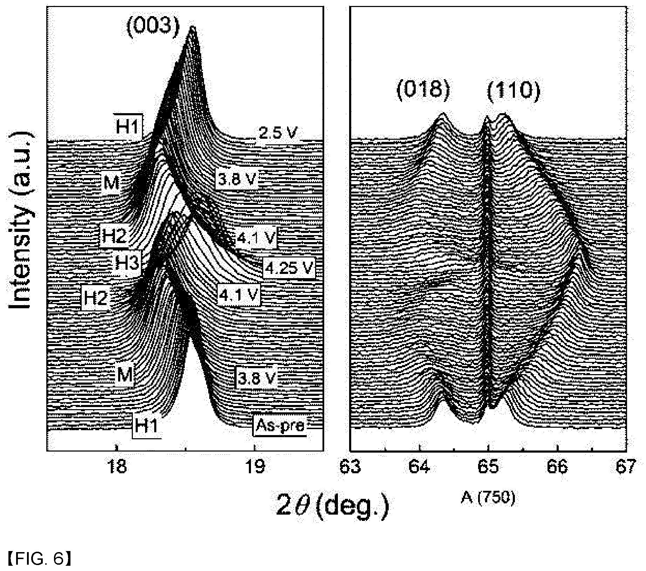

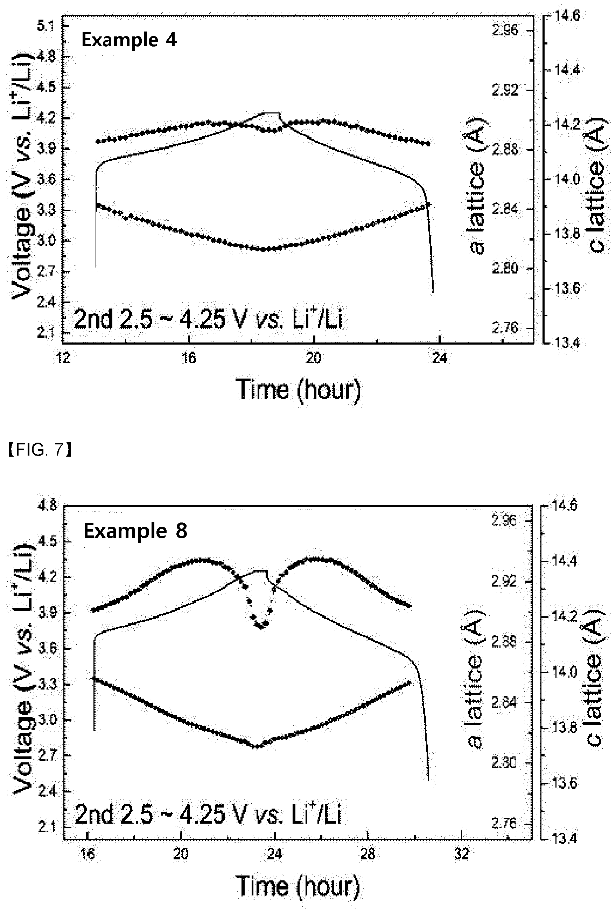

FIG. 6 to FIG. 8 is a graph showing the lattice constant change by real-time X-ray diffraction analysis for sequentially Example 4, Example 8, and comparative example 5. Referring to FIG. 6 to FIG. 8, it can be seen that the change in lattice constant is smaller in Examples 4 and 8 compared to Comparative Example 5. Through this, it can be seen that the active material manufactured in the Example suppresses structural collapse or cracks due to charge and discharge, and it is understood that the cycle-life characteristic of the battery is improved accordingly.

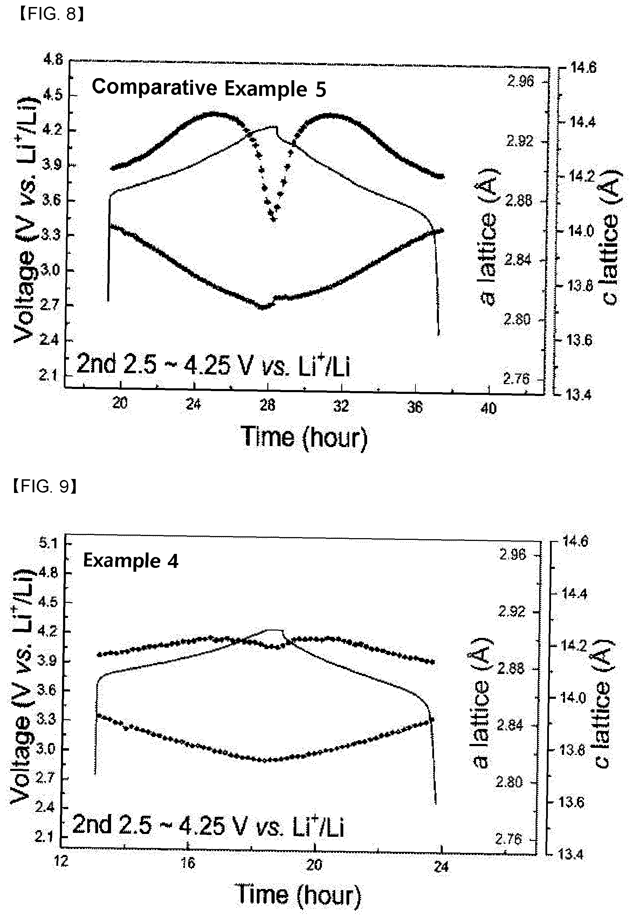

FIG. 9 to FIG. 11 is a graph showing the change in lattice constant according to real-time X-ray diffraction analysis after performing second charge and discharge in the 2.5 V to 4.25 V range for the batteries manufactured sequentially in Example 4, Example 8, and Comparative Example 5. In FIG. 9 to FIG. 11, it can be seen that the change in lattice constant is smaller in the Example than in the comparative example. Through this, it can be seen that the change in lattice constant is a reversible characteristic rather than a first cycle characteristic.

Table 2 to Table 3 below specifically shows the change in c-axis lattice constant. Table 2 is a table showing the c-axis lattice constant measured during initial charge and discharge for Example 4, Example 8, and comparative examples 5, 11, and 12. Table 3 is a table showing the c-axis lattice constant measured during second charge and discharge for Example 4, Example 8, and comparative examples 5, 11, and 12.

**(Table 2)**

| **first charge and discharge** | Lithium mole ratio to precursor, sintering temperatur e | c-axis lattice constant (Å) | | | | | c-axis lattice constant change (Max-Min) (Å) | c-axis lattice constant variation ratio% ((Max-Min)/Max*100) |
|---|---|---|---|---|---|---|---|---|
| | | before2.5 V charge | When 4.25 V charge | After2.5 V discharge | Maximum value during charge and discharge | minimum value during charge and discharge | | |
| | | | | | | | | |
| Example4 | 130, 700°C | 14.083 | 14.181 | 14.142 | 14.216 | 14083 | 0.133 | **0.938** |
| Examples | 130, 750°C | 14.168 | 14.177 | 14.220 | 14.410 | 14.168 | 0.242 | **1.680** |
| Comparati ve Examples | 130, 800°C | 14.148 | 14.075 | 14.200 | 14.413 | 14075 | 0.338 | **2.345** |
| Comparati ve Example1 1 | 103, 700°C | 14.161 | 13.941 | 14.193 | 14.300 | 13.941 | 0.359 | **2.507** |
| Comparati ve Example1 2 | 103, 750°C | 14.178 | 13.929 | 14.231 | 14.434 | 13.929 | 0.505 | **3.498** |
| Comparati ve Example1 | 103, 800°C | 14.178 | 13.915 | 14.223 | 14.460 | 13.915 | 0.545 | **3.768** |

**(Table 3)**

| **second** charge and discharge | Lithium mole ratio to precursor, sintering temperatur e | c-axis lattice constant (Å) | | | | | c-axis lattice constant change (Max-Min) (Å) | c-axis lattice constant variation ratio% ((Max-Min)/Max*100) |
|---|---|---|---|---|---|---|---|---|
| | | before2.5 V charge | When 4.25 V charge | After2.5 V discharge | Maximum value during charge and discharge | minimum value during charge and discharge | | |
| Example4 | 130, 700°C | **14.140** | **14.179** | **14.131** | **14.216** | **14.131** | **0.085** | **0.598** |
| Example8 | 130, 750°C | **14.224** | **14.163** | **14.240** | **14.408** | **14.163** | **0.245** | **1.698** |
| Comparati ve Example5 | 130, 800°C | **14.205** | **14.027** | **14.193** | **14.412** | **14.027** | **0.385** | **2.671** |
| Comparati ve Example1 1 | 103, 700°C | **14.195** | **13.935** | **14.194** | **14.302** | **13.935** | **0.367** | **2.563** |
| Comparati ve Example1 2 | 103, 750°C | **14.232** | **13.916** | **14.223** | **14.436** | **13.916** | **0.520** | **3.605** |
| Comparati ve Example1 | 103, 800°C | **14.220** | **13.897** | **14.221** | **14.460** | **13.897** | **0.563** | **3.896** |

Referring to the Table 2 to Table 3, in the case of Examples, the variation ratio of the c-axis lattice constant of the R-3m structure during initial and second charge and discharge in the 2.5 V to 4.25 V range is less than 2.3%. In addition, it can be seen that the maximum value of the c-axis lattice constant is less than 14.41 Å, and the change value of the c-axis lattice constant is less than 0.35 Å. Accordingly, the positive active materials of Examples are understood to be structurally very stable and exhibit high cycle-life characteristics without collapsing even under repeated charging and discharge. In addition, in the case of Comparative Examples 11 and 12, where the mole ratio of lithium to the precursor is 1.03, the c-axis lattice constant variation ratio was relatively high compared to the Examples, and the degree to which the lattice constant change is reduced compared to Comparative Example 1, that is, the difference in lattice constant change at the synthesis temperature was smaller than that of Examples 5 and 10 and Comparative Example 5. Through this, it can be seen that the change in lattice constant is a characteristic controlled not only by the sintering temperature but also by the amount of lithium added.

According to one embodiment, the molar content of lithium present in the positive active material structure is adjusted by adjusting the molar ratio of the lithium raw material to the precursor to 1:1.06 to 1:1.3 and the sintering temperature to 680 °C to 780 °C. Accordingly, it can be confirmed that the change rate of the c-axis lattice constant during charging and discharging is less than 2.3%.

### Evaluation Example 3: PDF (Pair Distribution Function) analysis using Fourier transform of neutron diffraction analysis result

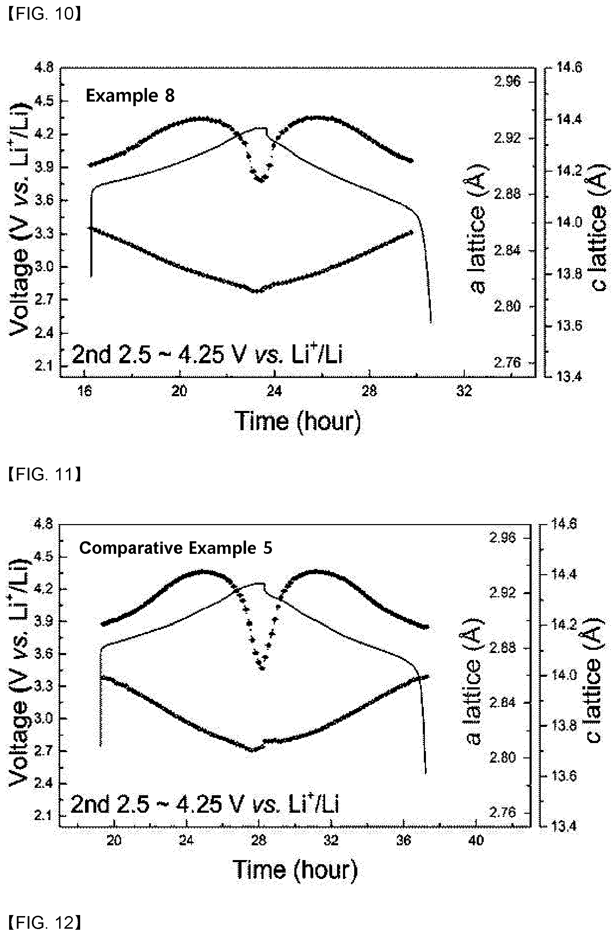

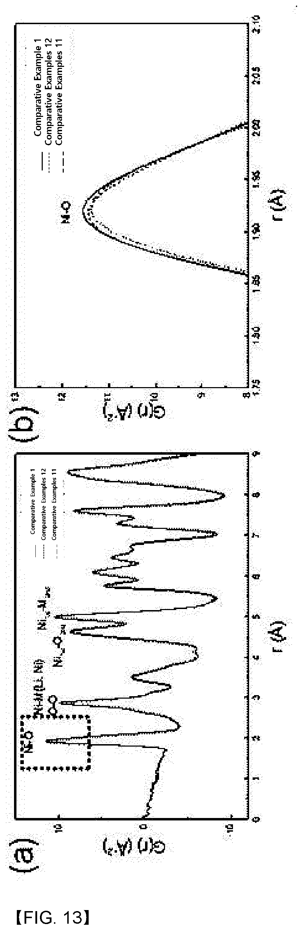

To understand the change in the M-O bond local structure due to transition metal substitution of excess lithium, Pair Distribution Function (PDF) analysis was performed using Fourier transform of the neutron diffraction analysis result of Evaluation Example 1. FIG. 12 is the PDF analysis result for the positive active material manufactured in Comparative Example 11, Comparative Example 12, and Comparative Example 1. FIG. 13 is the PDF analysis result for the positive active material manufactured in Example 4, Example 8, and comparative example 5. Comparing to FIG. 12 and FIG. 13, in the case of Comparative Example 1 and Comparative Example 5 synthesized at 800°C, there is no significant difference in Ni-O bond distance.

This means that the lithium/transition metal ratio within the crystal structure is maintained almost constant, regardless of the relationship with the lithium/transition metal ratio added during synthesis. On the other hand, in the case of Comparative Example 11 and Example 4 synthesized at 700°C, the Ni-O bond distance decreases as lithium becomes excessive.

This phenomenon occurs because at low synthesis temperatures, the ratio of lithium in the structure increases and the ratio of transition metals decreases. As a result, the oxidation number of Ni increases, the Ni-O bond strength increases, and this causes the Ni-O bond distance to decrease. This means that at 700°C, excess lithium is contained in the structure.

### Evaluation example 4: cation mixing analysis

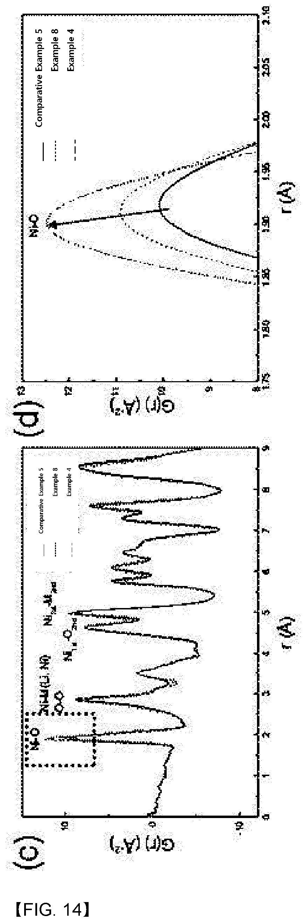

Through Rietveld analysis using neutron diffraction analysis for the positive active materials manufactured in Examples 1 to 8 and Comparative Examples 1 to 5, 11, and 12, the ratio occupied by nickel in the lithium site, that is, cation mixing, was analyzed and the result is shown in FIG. 14. Referring to the graphs of Comparative Example 11 and Examples 1 to 4 in Fig. 14, it can be seen that as the lithium content increases and the amount of excess lithium entering the active material structure increases, the oxidation number of the transition metal increases and the cation mixing decreases accordingly. In addition, it can be confirmed that the cation mixing of the positive active materials of Examples 1 to 8 is less than 5 atom%. It is confirmed that there is more cation mixing in Examples 1 to 8 compared to Comparative Examples 1 to 5 because the synthesis temperature is relatively lower in Examples compared to Comparative Examples.

### Evaluation Example 5: Analysis of residual impurity content

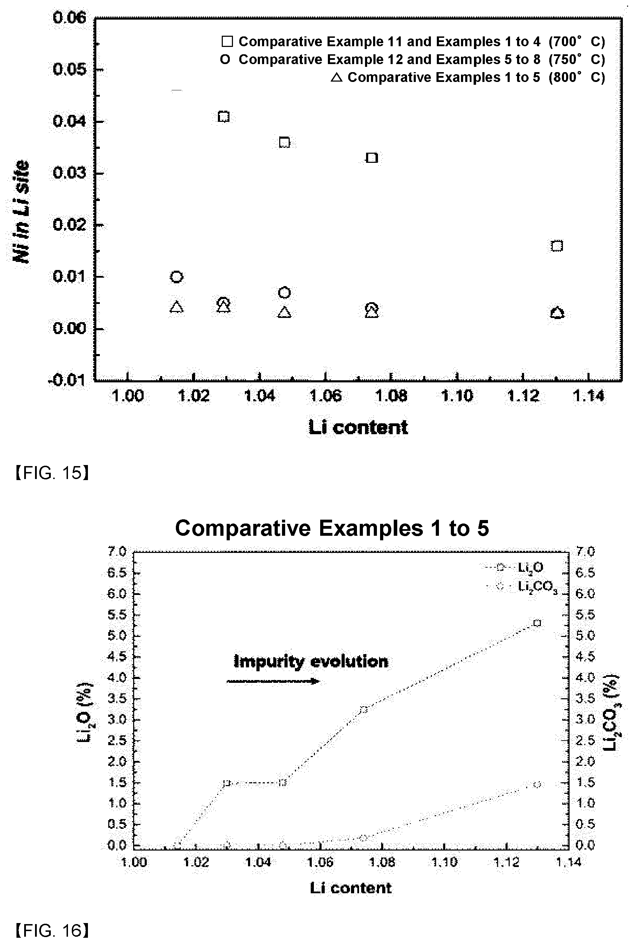

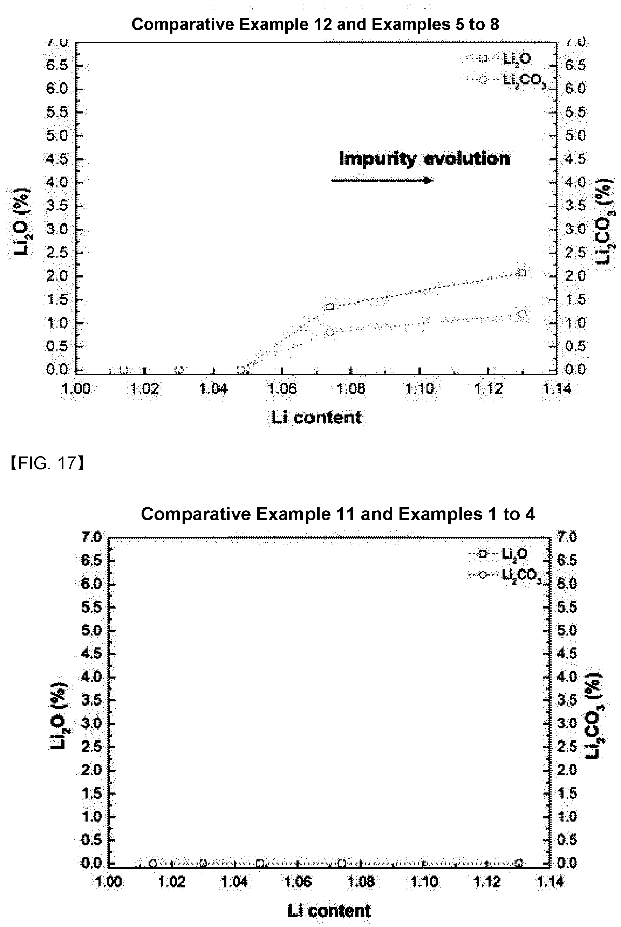

Rietveld analysis using X-ray diffraction analysis was performed on the positive active materials prepared in Examples 1 to 8 and Comparative Examples 1 to 5, 11, and 12. Through this, the contents of residual impurities Li₂CO₃ and Li₂O were measured. The content of impurities in the positive active materials of Comparative Examples 1 to 5 is shown in FIG. 15, the content of impurities in the positive active materials in Comparative Examples 12 and Examples 5 to 8 is shown in FIG. 16, and the content of impurities in the positive active materials of Comparative Examples 11 and Examples 1 to 4 is shown in FIG. 17. In FIG. 15, in case of Comparative Examples, it can be seen that excess lithium does not enter the active material structure and remains in the form of impurities such as Li₂CO₃ and Li₂O. On the other hand, in FIG. 16, in the case of Examples 5 to 8, the impurity content was greatly reduced, and in FIG. 17, in the case of Examples 1 to 4, there is almost no impurity, so it can be confirmed that excess lithium has penetrated into the active material structure.

### Evaluation Example 6: Evaluation of battery cycle-life characteristics

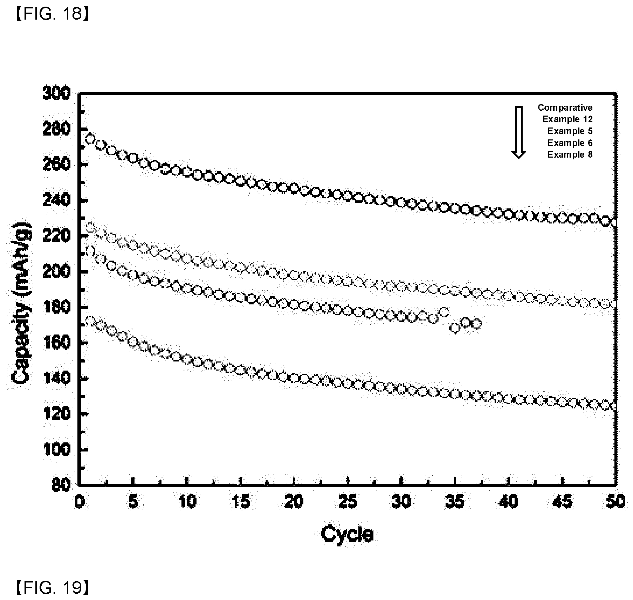

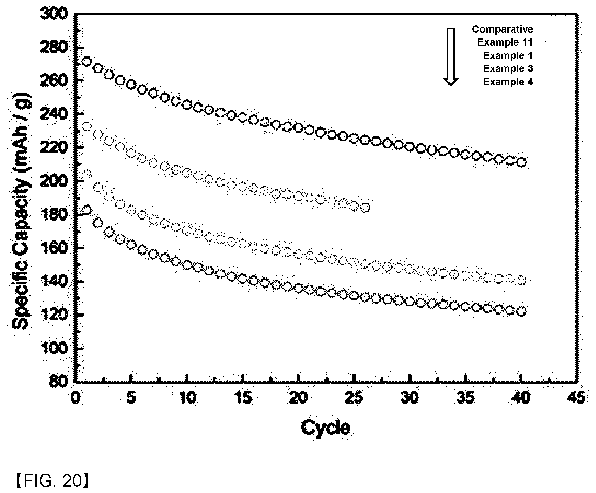

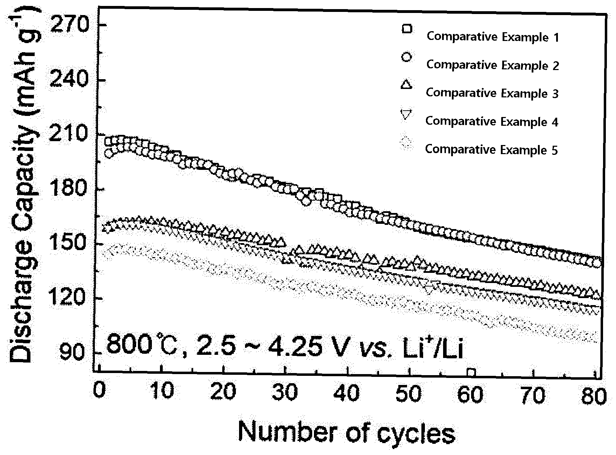

The batteries manufactured in Example and Comparative Example were charged and discharged for about 50 cycles in the range of 2.5V to 4.25V to evaluate lifespan characteristics. The lifespan characteristics of the batteries of Comparative Example 12 and Examples 5, 6, and 8 are shown in FIG. 18. The lifespan characteristics of the batteries of Comparative Example 11 and Examples 1, 3, and 4 are shown in FIG. 19. The lifespan characteristics of the batteries of Comparative Examples 1, 2, 3, 4, and 5 are shown in Figure 20. Referring to FIG, 18 to 20, the comparative examples of FIG. 20 have poor life characteristics because discharge capacity decreases with each cycle regardless of composition. On the other hand, the batteries of Examples in FIG. 18 and 19 implement high capacity and high lifespan characteristics. It can be seen that the lifespan characteristics are improved as the lithium content in the positive active material structure increases.

Although the preferred Examples have been described in detail above, the scope of the rights of the present invention is not limited thereto, and various modifications and variations of a person of an ordinary skill in the art using the basic concept defined in the following claim range and the improved form also falls within the scope of the rights of the present invention.

## Claims

1. A positive active material for a lithium secondary battery, comprising:
a compound represented by the following formula 1,
wherein, a molar content of lithium present in a structure of the positive active material, measured through neutron diffraction analysis, is 1.02 to 1.15 per mole of the positive active material, and
a c-axis lattice constant variation ratio of the R-3m structure is less than 2.3% for charge and discharge in the 2.5 V to 4.25 V range.
[Chemical Formula 1] Li₁₊ₐ(Ni_{b}M¹_{1-b})₁₋ₐO₂
in formula 1 above, 0<a<0.2, 0.8<b<1, and M1 is one or more elements selected from Co, Mn, Al, Mg, Ca, Ti, V, Cr, Zr, Nb, Mo, and W.

2. The positive active material of claim 1, wherein:
when charging and discharging in the 2.5 V to 4.25 V range, the maximum value of the c-axis lattice constant of the R-3m structure is 14.410 Å or less.

3. The positive active material of claim 1, wherein:
when charging and discharging in the 2.5 V to 4.25 V range, the c-axis lattice constant of the R-3m structure changes within the range of 13.900 Å to 14.410 Å.

4. The positive active material of claim 1, wherein:
in the positive active material, the nickel content in the lithium site is less than 5 atom%.

5. The positive active material of claim 1, wherein:
a content of Li₂CO₃ present in the positive active material, measured through X-ray diffraction analysis, is less than 0.5 wt%.

6. The positive active material of claim 1, wherein:
a content of Li₂O present in the positive active material, measured through X-ray diffraction analysis, is less than 1.0 wt%.

7. The positive active material of claim 1, wherein:
in formula 1 above, 0.90<b<1.

8. A manufacturing method of a positive active material for lithium secondary battery, comprising:
mixing a precursor containing the compound represented by the following formula 11, and a lithium raw material at a mole ratio of 1:1.06 to 1:1.3, and
sintering the mixture in the temperature range of 680 °C to 780 °C.
[Chemical Formula 11] Ni_{b11}M¹¹_{1-b11} (OH)₂
in formula 11 above, 0.8<b11<1, M¹¹ is one or more elements selected from Co, Mn, Al, Mg, Ca, Ti, V, Cr, Zr, Nb, Mo, and W.

9. A lithium secondary battery, comprising:
a positive electrode containing a positive active material according to any one of claim 1 to claim 7,
a negative electrode, and
an electrolyte.
